# EUROPÄISCHE PATENTSCHRIFT

(11) **EP 3 021 448 B1**
(45) Veröffentlichungstag und Bekanntmachung des Hinweises auf die Patenterteilung: **19.09.2018**
(21) Anmeldenummer: 15192944.5
(22) Anmeldetag: 04.11.2015
(51) Int. Cl.: H02J 3/38

(54) **WINDENERGIEANLAGE UND VERFAHREN ZUM BETREIBEN EINER WINDENERGIEANLAGE**
WIND ENERGY SYSTEM AND METHOD FOR OPERATING A WIND ENERGY SYSTEM
ÉOLIENNE, PROCEDE DE FONCTIONNEMENT D'UNE EOLIENNE

(30) Priorität: 12.11.2014 DE 102014016665
(43) Veröffentlichungstag der Anmeldung: 18.05.2016
(73) Patentinhaber: Senvion GmbH, 22297 Hamburg (DE)
(72) Erfinder: Letas, Heinz-Hermann, 24796 Bovenau (DE); Fortmann, Jens, 13156 Berlin (DE)
(74) Vertreter: Glawe, Delfs, Moll

(56) Entgegenhaltungen:
- EP-A1- 2 621 046
- US-A1- 2009 254 223
- US-A1- 2012 112 551

## Beschreibung

Die Erfindung betrifft eine Windenergieanlagen sowie ein Verfahren zum Betreiben einer Windenergieanlage.

Windenergieanlagen sind aus dem Stand der Technik bekannt. Sie umfassen in der Regel einen Rotor, der drehbar an einer Gondel angeordnet ist, wobei die Gondel wiederum drehbar auf einem Turm angeordnet ist. Der Rotor treibt über eine Rotorwelle ein Getriebe an, welches auf seiner Abtriebsseite mit einem Generator verbunden ist. Es sind auch Windenergieanlagen bekannt, bei denen der Rotor direkt, d. h. ohne ein dazwischengeschaltetes Getriebe, mit dem Generator verbunden ist. Eine durch Wind induzierte Rotationsbewegung des Rotors kann so in elektrische Energie gewandelt werden.

Um die so erzeugte elektrische Energie in ein Netz einspeisen zu können, ist es in der Regel erforderlich, die erzeugte elektrische Energie in Spannung, Frequenz und Phase an die im Netz herrschenden Gegebenheiten anzupassen. Hierzu werden Umrichter eingesetzt, mit denen die erzeugte elektrische Energie, die regelmäßig als Wechselspannung vorliegt, zu Gleichspannung gleichgerichtet und anschließend auf die für die Einspeisung erforderliche Spannung und Phase wechselgerichtet wird, wobei dann in der Regel eine definierte 3-phasige Wechselspannung vorliegt. Eine weitere Anpassung der Spannungsamplitude erfolgt dann ggf. durch einen gesonderten Transformator.
Insbesondere sind Bauarten von Windenergieanlagen bekannt, bei denen die gesamte, vom Generator erzeugte elektrische Energie über einen einzelnen Umrichter in ein für die Einspeisung in ein Netz erforderliche Wechselspannung umgerichtet wird. Man spricht dann von Windenergieanlagen mit Vollumrichter.

Auch wenn entsprechende Vollumrichter aufgrund der dafür regelmäßig verwendeten Wechselrichter mit Pulsweitenmodulator grundsätzlich geeignet sind, anhand von Spannungsvorgaben geregelt zu werden (spannungsgeführtes System), wird aufgrund von üblichen Regelungsvorgaben für Blind- und Wirkleistungserzeugung, die von einer übergeordneten Regelung der Windenergieanlage, eines Windparks oder des Netzes vorgegeben werden, regelmäßig auf eine Vektorregelung zurückgegriffen (stromgeführtes System). Dabei werden für bestimmte Frequenzen die erforderlichen Messwerte - in der Regel die Stromstärken im Bereich zwischen Umrichter und Netz - nach einer d/q-Transformation geregelt und anschließend in die für die letztendliche Umrichter-Steuerung erforderlichen Steuerspannungen rücktransformiert. Grundsätzlich können bei einer entsprechenden Regelung beliebig viele Frequenzen berücksichtigt werden, in der Regel wird sich die Regelung aber auf das sogenannte Mitsystem (Frequenz = Netzsollfrequenz), das sogenannte Gegensystem (Frequenz = - Netzsollfrequenz), ggf. einige Oberschwingungen (Frequenz = n * Netzsollfrequenz) und ggf. Frequenzen von Rundsteueranlagen beschränken.

Während spannungsgeführte Systeme sofort auf jegliche Änderungen im Netz (Spannung, Frequenz, Phase) reagieren können und dieses Verhalten grundsätzlich geschätzt wird (vgl. Synchrongeneratoren konventioneller Kraftwerke), regieren stromgeführte Systeme, wenn überhaupt, nur indirekt und mit einiger Verzögerung auf entsprechende Änderungen. Entweder bilden sich entsprechende Veränderungen nur mit Verzögerung in den Messwerten ab oder können nur über zeiterfordernde Analysefunktionen (wie bspw. harmonische Analysen) und/oder Filter ermittelt werden. In beiden Fällen geht Zeit verloren. Eine schnelle Reaktion auf Änderungen im Netz ist daher nicht möglich, womit bestimmte Systemdienstleistungen, bei denen eine schnelle Reaktion zwingend erforderlich ist (wie z.B. der Bereitstellung von Kurzschlussleistung im Normalspannungsbereich), nicht erbracht werden können.

US2012/112551 offenbart insbesondere in seinen Figuren 9 und 12 sowie der dazugehörigen Beschreibung eine bekannte Vorsteuerung zur Z-Kompensation. Dazu wird auf Basis der netzseitigen Spannungen a,b,c der Wert Vd berechnet, der den Winkel des Spannungszeigers repräsentiert. Mit dem vom Regler bereits auf Basis einer Stromstärke ermittelten Spannungswert vdl kann der lastbedingte Leitungsspannungsabfall kompensiert werden.

Der Erfindung liegt daher die Aufgabe zugrunde, eine Windenergieanlage sowie ein Verfahren zum Betrieb einer Windenergieanlage zu schaffen, bei denen die aus dem Stand der Technik bekannten Nachteile nicht mehr oder zumindest nur noch in verminderten Umfang auftreten.

Gelöst wird diese Aufgabe durch die Windenergieanlage gemäß dem Hauptanspruch sowie das Verfahren zum Betrieb einer Windenergieanlage gemäß dem unabhängigen Anspruch 6. Vorteilhafte Weiterbildungen sind Gegenstand der abhängigen Ansprüche.

Demnach betrifft die Erfindung eine Windenergieanlage umfassend einen durch einen Rotor antreibbaren Generator zur Erzeugung elektrischer Energie, einen Umrichter zur Umwandlung der vom Generator erzeugten elektrischen Energie zur Einspeisung in das Versorgungsnetz und eine Regelungseinrichtung zur Regelung des Umrichters, wobei die Regelungseinrichtung zur stromgeführten Umsetzung von Regelungsvorgaben für Blind- und Wirkleistungserzeugung ausgebildet ist, und wobei ein Zusatzregelungsmodul vorgesehen ist, welches zur Einprägung einer Spannungsführung in die stromgeführte Regelungseinrichtung ausgebildet ist.

Weiterhin betrifft die Erfindung ein Verfahren zum Betreiben einer Windenergieanlage mit einem Umrichter, welcher stromgeführt geregelt wird, wobei in die stromgeführte Regelung eine spannungsgeführte Einprägung vorgenommen wird.

Indem erfindungsgemäß die aus dem Stand der Technik grundsätzlich bekannte stromgeführte Regelung einer Windenergieanlage durch ein Zusatzregelmodul ergänzt wird, welches eine Spannungsführung in die eigentlich stromgeführte Regelung einprägt, können die Nachteile der rein stromgeführten Regelung verringert werden, ohne auf die grundsätzlich gewünschte Regelbarkeit der stromgeführten Regelung verzichten zu müssen. "Einprägen" bedeutet in Zusammenhang mit dieser Erfindung, dass die Stromführung nicht vollständig von der Spannungsführung ersetzt, sondern nur durch diese ergänzt bzw. teilweise überlagert wird.

Durch die Einprägung der Spannungsführung ist es bei der Erfindung nunmehr möglich, auch auf plötzlich auftretende Veränderungen im Versorgungsnetz schnell reagieren zu können. Im Vergleich zum Stand der Technik muss für die Reaktion auf Veränderung im Versorgungsnetz nämlich nicht auf zeitraubende Analyse der Netzsituation, wie bspw. dem Erkennen und Zerlegung der Größen in Mit- und Gegensystem, zurückgegriffen werden. Vielmehr kann das Zusatzregelmodul aufgrund der Spannungsführung unmittelbar auf Veränderungen reagieren und durch Einwirkung auf die Regelungseinrichtung der Windenergieanlage unmittelbar erforderliche Ströme für das Versorgungsnetz bereitstellen.

Während die Regelungseinrichtung üblicherweise nur auf Basis von im Netz oder netzseitig an der Windenergieanlage gemessenen Stromstärken regelt, arbeitet das Zusatzregelmodul in erster Linie mit im Netz oder netzseitig an der Windenergieanlage gemessenen Spannungen. Selbstverständlich ist es aber auch möglich, dass dem Zusatzregelmodul noch weitere Messgrößen, wie bspw. die Stromstärke im Netz, zugeführt und von dieser berücksichtigt werden. "Netzseitig an der Windenergieanlage" bedeutet in diesem Zusammenhang eine Messung auf der Netzseite des Umrichters, im Regelfall zwischen Umrichter und Anlagentransformator.

Bei einer stromgeführten Regelung gemäß dem Stand der Technik werden regelmäßig durch eine übergeordnete Steuerung (bspw. einer Windpark- oder Netzsteuerung) Sollwerte bereitgestellt, die dann von der stromgeführten Regelung berücksichtigt werden. Die Sollwerte können bspw. Sollwerte für Blind- und Wirkleistung umfassen. Auch ist möglich, dass die Sollwerte aus Blind- und Wirkleistungsvorgaben abgeleitete Stromstärken für Blind- und Wirkleistung sind. Das erfindungsgemäß vorgesehene Zusatzregelmodul kann dazu ausgebildet sein, wenigstens einen dieser Sollwerte zu beeinflussen. Dazu kann vorgesehen sein, dass das Zusatzregelungsmodul Korrekturwerte für wenigstens einen dieser Sollwerte bereitstellt oder wenigsten einen Sollwert der übergeordneten Steuerung unmittelbar verändert. Die stromgeführte Regelung regelt dann auf Basis dieses korrigierten wenigstens einen Sollwerts.

Alternativ oder zusätzlich ist es möglich, dass das Zusatzregelmodul wenigstens einen Zwischenwert des Regelkreises der Regelungseinrichtung beeinflusst. Dazu kann an einer beliebigen Stelle des Regelkreises wenigstens ein Zwischenwert verändert werden, entweder indem von dem Zusatzregelmodul geeignete Korrekturwerte bereitgestellt werden oder die entsprechenden Größen unmittelbar durch das Zusatzregelmodul verändert werden. Bei einem entsprechenden Zwischenwert kann es sich um eine Steuergröße, eine Stellgröße, eine Störgröße oder eine Regelgröße des Regelkreises handeln. Eine Größe kann bspw. "unmittelbar durch das Zusatzregelmodul verändert werden", wenn die entsprechende Größe dem Zusatzregelmodul als Eingangsgröße zugeführt und als gegenüber der Eingangsgröße veränderter Ausgangsgröße an die Regelungseinrichtung übergeben wird.

Vorzugsweise ist eine Messeinheit zur Spannungsmessung der netzseitigen Spannung an der Windenergieanlage vorgesehen, wobei die Messeinheit zur Übertragung der Messwerte an das Zusatzregelmodul ausgebildet ist. Bei der Messeinheit kann es sich um Messsensoren, die mit dem Zusatzregelmodul verbunden sind, handeln.

Es ist bevorzugt, wenn das Zusatzregelmodul zur Ermittlung von einem Korrekturwert oder zur Veränderung wenigstens eines Sollwerts und/oder wenigstens eines Zwischenwerts anhand von wenigstens einem Kennfeld auf Basis von Mess- und Eingangswerten ausgebildet ist, wobei die Mess- und Eingangswerte neben den Spannungen vorzugsweise auch die Stromstärken im Netz oder netzseitig an der Windenergieanlage umfassen und das Kennfeld die gewünschte Reaktion der Regelung der Windenergieanlage wiederspiegelt. Aus den Mess- und Eingangswerten kann unmittelbar oder ggf. nach Ableitung von einfach zu ermittelnden Zwischengrößen mit Hilfe des wenigstens einen Kennfeldes schnell und problemlos ein Ausgangswert für das Zusatzregelmodul ermittelt werden, welches dann in die Regelung der Regelungseinrichtung wie beschrieben einfließen kann. Indem auf aufwendige Analysen der Mess- und Eingangswerte verzichtet wird und die Ermittlung der Ausgangswerte des Zusatzregelmoduls über wenigstens ein Kennfeld ebenfalls schnell möglich ist, wird insgesamt eine schnelle Reaktionszeit des Zusatzregelmoduls erreicht. Dies gilt insbesondere im Vergleich zu rein stromgeführten Regelungseinrichtungen, bei denen eine zeitraubende Analyse der Netzsituation, wie bspw. dem Erkennen und Zerlegen der Größen in Mit- und Gegensystem, durchgeführt werden muss. Zu den einfach zu ermittelnden Zwischengrößen zählen bspw. Spannungsänderung, Frequenzänderung und Phasenänderung.

Alternativ zu einem Zusatzregelmodul basierend auf Kennfeldern kann das Zusatzregelmodul ein Beobachtermodul umfassen, wobei das Beobachtermodul einen Synchrongenerator abbildet. Das Beobachtermodul bildet anhand von aus dem Netz und/oder der Regelungseinrichtung bekannten Eingangsgrößen das Verhalten eines Synchrongenerators nach und liefert als Ergebnis Korrekturwerte für die Regelungseinrichtung. Durch diese Korrekturwerte werden bei der Windenergieanlage trotz grundsätzlich stromgeführtem Umrichter wenigstens teilweise die vorteilhaften Eigenschaften eines Synchrongenerators verwirklicht. Die Korrekturwerte können unmittelbar an die Regelungseinrichtung übermittelt oder zur unmittelbaren Veränderung von wenigstens einem Sollwert, wenigstens einem Zwischenwert und/oder wenigstens einer Stellgröße des Regelkreises durch das Zusatzregelmodul genutzt werden.

Zur Erläuterung des erfindungsgemäßen Verfahrens wird auf die oben stehenden Ausführungen verwiesen.

Die Erfindung wird nun anhand von bevorzugten Ausführungsbeispielen unter Bezugnahme auf die beigefügten Zeichnungen weiter beschrieben. Es zeigen:
- Figur 1:: eine vereinfachte schematische Darstellung einer Windenergieanlage mit stromgeführter Regelung gemäß dem Stand der Technik;
- Figur 2a, b:: eine vereinfachte schematische Darstellung einer ersten Ausführungsform einer erfindungsgemäßen Windenergieanlage in zwei Varianten; und
- Figur 3a, b:: zwei Varianten des Zusatzregelmoduls gemäß Figur 2a, b.

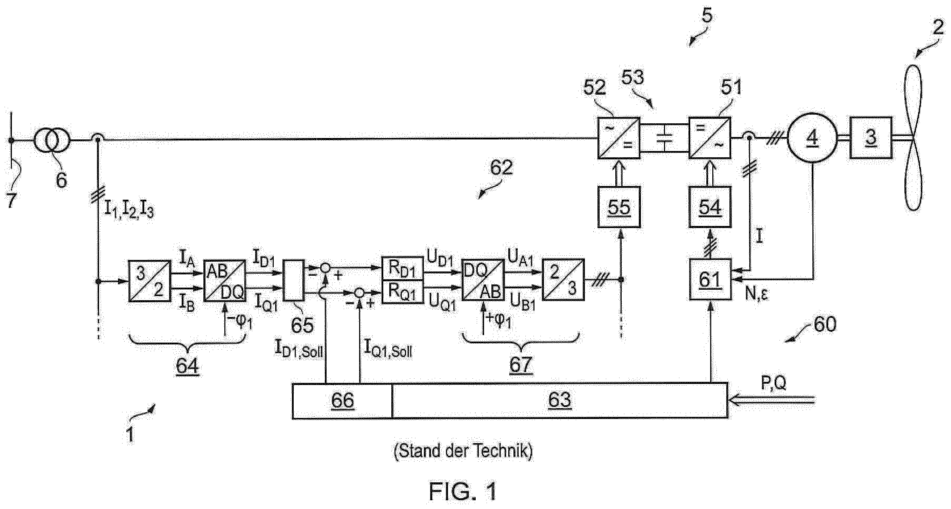

In Figur 1 ist ein vereinfachtes Schema einer stromgeführten Regelung einer Windenergieanlage gemäß dem Stand der Technik dargestellt. Die Windenergieanlage 1 umfasst einen Rotor 2, der über ein Getriebe 3 einen Generator 4 antreibt, um so vom Wind induzierte mechanische Energie in elektrische Energie zu wandeln. Die vom Generator 4 stammende elektrische Energie wird durch den Umrichter 5 hinsichtlich Phase und Frequenz in eine zur Einspeisung in das Netz 7 geeignete Form gewandelt. Über einen Transformator 6 zur Anpassung der Spannung wird die gewandelte elektrische Energie in das Netz 7 eingespeist. Bei dem Netz 7 kann es sich um ein Versorgungsnetz oder um ein Zwischennetz, bspw. ein windparkinternes Netz, von wo aus die elektrische Energie in ein Versorgungsnetz eingespeist wird, handeln.

Der Umrichter 5 umfasst einen generatorseitigen Gleichrichter 51 und einen netzseitigen Wechselrichter 52. der Gleichrichter 51 und der Wechselrichter 52 sind durch einen Gleichsspannungszwischenkreis 53 miteinander verbunden und werden jeweils mit Pulsweitenmodulator 54, 55 betrieben.

Der Umrichter wird über eine Regelungseinrichtung 60 geregelt. Die Regelungseinrichtung 60 umfasst einen äußeren Regelkreis 63, eine Regelungseinheit 61 für den Gleichrichter 51 und eine Regelungseinheit 62 für den Wechselrichter 52. Der äußere Regelkreis 63 erhält Führungsgrößen, wie bspw. die gewünschte Wirk- und Blindleistung P, Q und wandelt diese in Steuersignale für die Regelungseinheiten 61, 62. Sofern vorhanden, gibt der äußere Regelkreis 63 darüber hinaus noch Steuersignale für die Pitch-Verstellung der Rotorblätter des Rotors 2 (nicht dargestellt). Der äußere Regelkreis 63 regelt dabei mit oberster Priorität die Drehzahl und das Drehmoment des Triebstrangs zwischen Rotor 2 und Generator 4, anschließend erfolgt die Blindleistungs- und Spannungsregelung über den Wechselrichter 52. Zuletzt versucht der äußere Regelkreis 63 die Spannung im Zwischenkreis konstant zu halten, indem die zugeführte Wirkleistung vom Gleichrichter 51 über den Wechselrichter 52 ins Netz weitergeleitet wird.

Die Regelungseinheit 61 für den Gleichrichter 51 berücksichtigt im dargestellten Ausführungsbeispiel neben den Steuergrößen von dem äußeren Regelkreis auch noch die Stromstärken I zwischen Generator 4 und Gleichrichter 51, die Drehzahl N des Generators 4 sowie den Erregergrad ε des Generators 4 als Eingangsgrößen.

Die Regelungseinheit 62 für den Wechselrichter 52 ist stromgeführt ausgestaltet. Dazu werden die zwischen Umrichter 5 und Transformator 6 vorliegenden netzseitigen Stromstärken I₁, I₂, I₃ gemessen und für einzelne Frequenzen geregelt. In Figur 1 ist lediglich die Regelung für eine einzelne Frequenz f₁ mit Winkel ϕ₁ dargestellt. Die dargestellte Regelung bezieht sich also auf das Mitsystem. Üblicherweise ist wenigstens auch noch eine Regelung für das Gegensystem (ϕ₂ = - ϕ₁) sowie ggf. für einzelne Frequenzen von Oberschwingungen und/oder Frequenzen von Rundsteueranlagen vorgesehen. Diese Regelungen sind jedoch im Wesentlichen analog zu der dargestellten Regelung ausgebildet, weshalb aus Übersichtlichkeitsgründen auf eine Darstellung der weiteren Regelungen verzichtet wird. Die entsprechenden Steuerspannungen werden dann von dem Pulsweitenmodulator 55 addiert.

Die gemessenen netzseitigen Stromstärken I₁, I₂, I₃ werden durch eine Vektor-Transformation 64 auf Basis des Phasenwinkels ϕ₁ in ein zweiachsiges Koordinatensystem mit den Achsen d und q überführt, sodass am Ende der Vektor-Transformation 64 die Stromstärken I_{D1} und I_{Q1} vorliegen. Diese Stromstärken werden dann einem Filter 65 zugeführt.

Die gefilterten Werte werden dann mit Vorgaben des äußeren Regelkreises 63 zu geänderten Werten gewandelt. Die hierfür erforderlichen Vorgaben des äußeren Regelkreises 63 müssen in d/q-Koordinaten vorliegen, weshalb der äußere Regelkreis 63 ein Modul 66 zur Zuordnung von Vorgaben für Wirk- und Blindleistung zu den Koordinaten d und q aufweist, also I_{D1,Soll} und I_{Q1,soll} liefert.

Die geänderten Werte werden dann Reglern R_{D1} und R_{Q1} zugeführt, die auf Basis der geänderten Werte Spannungsvorgaben U_{D1} und U_{Q1} ermitteln. Diese Spannungsvorgaben werden durch eine inverse Vektor-Transformation 67 wieder in drei Spannungsvorgaben für die drei Phasen umgewandelt und dem Pulsweitenmodulator 55 zugeführt. Der Wechselrichter 52 wird so stromgeführt geregelt.

Es kann auch vorgesehen sein, dass sich die Regelungseinheiten 61, 62 unmittelbar oder über den äußeren Regelkreis 63 gegenseitig beeinflussen (nicht dargestellt).

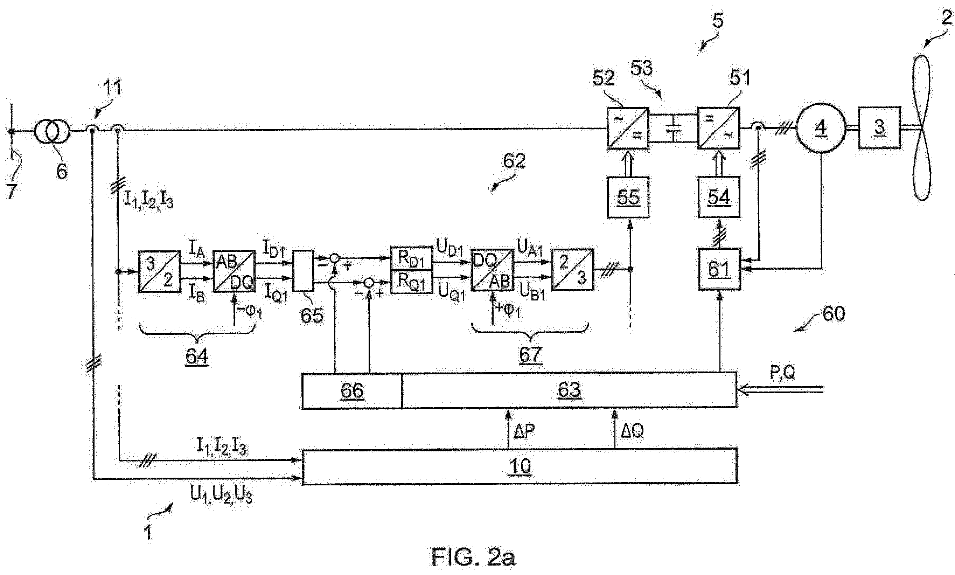

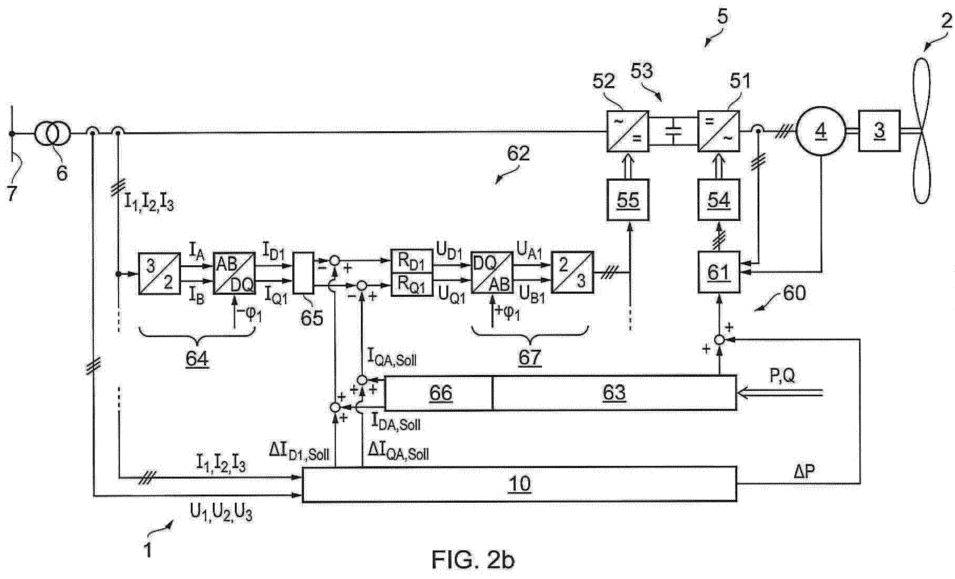

In Figur 2a, b ist ein erstes Ausführungsbeispiel einer erfindungsgemäßen Windenergieanlage 1 in zwei Varianten schematisch dargestellt. Die Windenergieanlage 1 gleicht dabei in ihrem grundsätzlichen Aufbau einer Windenergieanlage 1 gemäß dem Stand der Technik, weshalb auf die Ausführungen zu Figur 1 verwiesen wird. Nachfolgend wird auf das erfindungsgemäß vorgesehene Zusatzmodul 10 und dessen Funktionsweise eingegangen.

In der Variante gemäß Figur 2a bekommt das Zusatzregelmodul 10 als Eingangsgröße neben den netzseitig gemessenen Stromstärken I₁, I₂, I₃, wie sie auch für die Regeleinheit 62 verwendet werden, von einer hierfür vorgesehenen Messeinheit 11 auch noch die netzseitigen Spannungen U₁, U₂, U₃ übermittelt. Im Zusatzregelmodul 10 werden aus den Spannungen U₁, U₂, U₃ und Stromstärken I₁, I₂, I₃ Korrekturwerte für die Regelung der Windenergieanlage 1 ermittelt, wobei die Korrekturwerte eine Spannungsführung abbilden, d.h. die Korrekturwerte primär von den netzseitigen Spannungen U₁, U₂, U₃ abhängen. In einer nicht dargestellten Untervariante der Variante aus Figur 2a kann sogar auf die Zuführung der Stromstärken I₁, I₂, I₃, als Eingangsgröße für das Zusatzregelmodul 10 vollständig verzichtet werden.

Bei der in Figur 2a dargestellten Variante werden als Korrekturwerte von dem Zusatzmodul 10 Zusatzsollwerte von Wirk- und Blindleistung ΔP, ΔQ an den äußeren Regelkreis 63 übermittelt, die dort mit den Führungsgrößen für Wirk- und Blindleistung P, Q verrechnet werden. Dabei kann der Korrekturwert ΔP nicht nur in den Führungsgrößen für die Regelungseinheit 62 des Wechselrichters 52 einfließen sondern auch in die Führungsgrößen für die Regelungseinheit 61 des Gleichrichters 51.

Alternativ dazu kann - wie in Figur 2b schematisch dargestellt - das Zusatzregelmodul 10 unmittelbar Zusatzsollwerte für die Steuerströme I_{D1,Soll} und I_{Q1,Soll} liefern, nämlich ΔI_{D1,Soll} und ΔI_{Q1,Soll}. Gleichzeitig wird ein Zusatzsollwert ΔP zu den von dem äußeren Regelkreis 63 ermittelten Führungsgrößen für die Regelungseinheit 61 des Gleichrichters 51 unter Umgehung des äußeren Regelkreises 63 hinzugefügt. Dies bietet gegenüber der Variante gemäß Figur 2a den Vorteil, dass der äußere Regelkreis 63 nicht verändert werden muss, um bspw. die Zusatzsollwerte ΔP, ΔQ berücksichtigen zu können (vgl. Figur 2a).

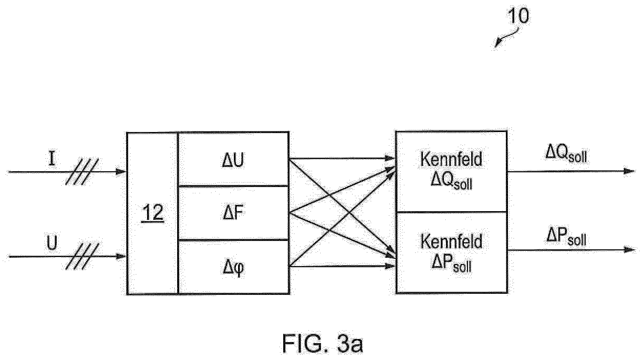

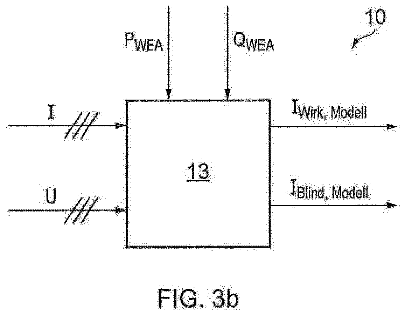

In Figuren 3a, b sind zwei Varianten vom Aufbau des Zusatzregelmoduls 10 dargestellt.

In der Variante des Zusatzregelmoduls 10 gemäß Figur 3a werden ausgehend von den Eingangsgrößen der Spannung U und der Stromstärke I (bzw. U₁, U₂, U₃ oder I₁, I₂, I₃) durch ein Überwachungsmodul 12 momentane Abweichungen im Netz hinsichtlich Spannung (ΔU), Frequenz (ΔF) und Phase (Δϕ) festgestellt. Diese momentanen Abweichungen werden genutzt, um mithilfe von Kennfeldern unmittelbar Korrekturwerte für Blind- und Wirkleistung ΔP, ΔQ abzuleiten, mit denen das gewünschte Verhalten der Windenergieanlage auch bei plötzlich auftretenden Ereignissen im Netz, wie bspw. einem Kurzschluss, erreicht werden kann. Selbstverständlich ist es auch möglich, dass die Kennfelder unmittelbar Korrekturwerte für die Steuerströme I_{D1,Soll} und I_{Q1,Soll} liefern, nämlich ΔI_{D1,Soll} und ΔI_{Q1,Soll}. Auch ist es möglich, dass andere momentane Abweichungen zur Ermittlung von Korrekturwerten herangezogen werden. Die Kennfelder können als mathematische Gleichungen oder Tabellen hinterlegt sein.

In der Variante gemäß Figur 3b ist das Zusatzregelmodul 10 als Beobachtermodul 13 ausgebildet. Im Beobachtermodul 13 wird ein Beobachter-Modell eines Synchrongenerators betrieben. Das Beobachtermodul 13 liefert daher auf Basis der Eingangsgrößen Spannung U und Stromstärke I (bzw. U₁, U₂, U₃ oder I₁, I₂, I₃) sowie zusätzlich der Wirk- und Blindleistung der Windenergieanlage 1 P_{WEA}, Q_{WEA} als Ausgangswerte die Blind- und Wirkleistungsströme des modellierten Synchrongenerators I_{Wirk,Modell} und I_{Blind,Modell}. Diese Werte können dann - nachdem sie ggf. auf das d/q-System transformiert sind - unmittelbar in die Regelung des Wechselrichters einfließen (vgl. bspw. Figur 2b). Das Beobachter-Modell 13 kann vorteilhaft als Beobachter im Zustandsraum ausgestaltet sein.

## Patentansprüche

1. Windenergieanlage (1) umfassend einen durch einen Rotor (2) antreibbaren Generator (4) zur Erzeugung elektrischer Energie, einen Umrichter (5) umfassend einen Wechselrichter (52) zur Umwandlung der vom Generator (4) erzeugten elektrischen Energie zur Einspeisung in ein Netz (7) und eine Regelungseinrichtung (60) zur Regelung des Umrichters (5), wobei die Regelungseinrichtung (60) zur stromgeführten Umsetzung von Regelungsvorgaben für Blind- und Wirkleistungserzeugung ausgebildet ist und eine stromgeführte Regelungseinheit (62) für den Wechselrichter (52) des Umrichters (5) mit wenigstens einer Regelung umfasst, bei der gemessene netzseitige Stromstärken (I₁, I₂, I₃) für wenigstens eine vorgegebene Frequenz (f₁) in Stromstärken (I_{D1}, I_{Q1}) eines zweiachsigen d-q-Koordinatensystem überführt werden, auf deren Basis zwei Regler (R_{D1}, R_{Q1}) Spannungsvorgaben (U_{D1}, U_{Q1}) im d-q-Koordinatensystem ermitteln,
**dadurch gekennzeichnet, dass**
ein Zusatzregelungsmodul (10) vorgesehen ist, welches zur Einprägung einer Spannungsführung in die stromgeführte Regelungseinrichtung (60) ausgebildet ist, wobei von der netzseitigen Spannung (U₁, U₂, U₃) abhängige Korrekturwerte als Teil von Sollwerten in beide Stromstärken (I_{D1}, I_{Q1}) im d-q-Koordinatensystem zur Veränderung der Eingangsgrößen der beiden Regler (R_{D1}, R_{Q1}) berücksichtigt sind.

2. Windenergieanlage nach Anspruch 1,
**dadurch gekennzeichnet, dass**
das Zusatzregelmodul (10) zur Einprägung der Spannungsführung durch Beeinflussung wenigstens eines Sollwertes und/oder wenigstens eines Zwischenwertes der Regelungseinrichtung (60) ausgebildet ist.

3. Windenergieanlage nach Anspruch 1 oder 2,
**dadurch gekennzeichnet, dass**
eine Messeinheit (11) zur Spannungsmessung der netzseitigen Spannung der Windenergieanlage (1) vorgesehen ist, wobei die Messeinheit (11) zur Übertragung der Messwerte an das Zusatzregelmodul (10) ausgebildet ist.

4. Windenergieanlage nach einem der vorhergehenden Ansprüche,
**dadurch gekennzeichnet, dass**
das Zusatzregelmodul (10) zur Ermittlung von wenigstens einem Sollwert, wenigstens einem Zwischenwert, wenigstens einem Korrekturwert für einen Sollwert und/oder wenigstens einem Korrekturwert für einen Zwischenwert anhand von Kennfeldern auf Basis von Mess- und Eingangswerten ausgebildet ist.

5. Windenergieanlage nach einem der Ansprüche 1 bis 3,
**dadurch gekennzeichnet, dass**
das Zusatzregelmodul (10) als Beobachtermodul (13) ausgebildet ist, welches einen Synchrongenerator abbildet.

6. Verfahren zum Betreiben einer Windenergieanlage (1) mit einem Umrichter (5) umfassend einen Wechselrichter (52), wobei der Wechselrichter (52) des Umrichters (5) der Windenergieanlage (1) derart stromgeführt geregelt wird, dass gemessene netzseitige Stromstärken (I₁, I₂, I₃) für wenigstens eine vorgegebene Frequenz (f₁) in Stromstärken (I_{D1}, I_{Q1}) eines zweiachsigen d-q-Koordinatensystem überführt werden, auf deren Basis Spannungsvorgaben (U_{D1}, U_{Q1}) im d-q-Koordinatensystem ermittelt werden,
**dadurch gekennzeichnet, dass**
in die stromgeführte Regelung eine spannungsgeführte Einprägung vorgenommen wird, für die vor der Ermittlung der Spannungsvorgaben (U_{D1}, U_{Q1}) im d-q-Koordinatensystem Korrekturwerte in beide Stromstärken (I_{D1}, I_{Q1}) im d-q-Koordinatensystem als Eingangsgrößen berücksichtigt werden.

7. Verfahren nach Anspruch 6,
**dadurch gekennzeichnet, dass**
die spannungsgeführte Einprägung auf Basis von Kennfeldern vorgenommen wird.

8. Verfahren nach Anspruch 6,
**dadurch gekennzeichnet, dass**
die spannungsgeführte Einprägung auf Basis von einem Beobachter vorgenommen wird, wobei der Beobachter einen Synchrongenerator abbildet.

## Claims

1. Wind energy installation (1) comprising a generator (4) for generating electrical energy, which generator can be driven by a rotor (2), a converter (5) comprising an inverter (52) for for feeding into a grid (7), and a control device (60) converting the electrical energy generated by the generator (4)for controlling the converter (5), wherein the control device (60) is designed for current-based conversion of control specifications for reactive and active power generation and comprises a current-based control unit (62) for the inverter (52) of the converter (5) having at least one control system in which measured grid-side current intensities (I₁, I₂, I₃) for at least one prescribed frequency (f₁) are converted to current intensities (I_{D1}, I_{Q1}) of a two-axis d-q coordinate system, on the basis of which current intensities two controllers (R_{D1}, R_{Q1}) determine voltage specifications (U_{D1}, U_{Q1}) in the d-q coordinate system,
**characterized in that**
an additional control module (10) is provided, which is designed to impress a voltage guide into the current-based control device (60), wherein corrected values that are dependent on the grid-side voltage (U₁, U₂, U₃) are taken into account as part of target values in both current intensities (I_{D1}, I_{Q1}) in the d-q coordinate system for the purpose of changing the input variables of the two controllers (R_{D1}, R_{Q1}).

2. Wind energy installation according to Claim 1, **characterized in that** the additional control module (10) is designed to impress the voltage guide by influencing at least one target value and/or at least one intermediate value of the control device (60).

3. Wind energy installation according to Claim 1 or 2, **characterized in that** a measuring unit (11) is provided for voltage measurement of the grid-side voltage of the wind energy installation (1), wherein the measuring unit (11) is designed to transmit the measurement values to the additional control module (10).

4. Wind energy installation according to one of the preceding claims, **characterized in that** the additional control module (10) is designed to determine at least one target value, at least one intermediate value, at least one corrected value for a target value and/or at least one corrected value for an intermediate value using characteristic maps based on measurement values and input values.

5. Wind energy installation according to one of Claims 1 to 3, **characterized in that** the additional control module (10) is designed as an observer module (13), which maps a synchronous generator.

6. Method for operating a wind energy installation (1) having a converter (5) comprising an inverter (52), wherein the inverter (52) of the converter (5) of the wind energy installation (1) is controlled in a current-based manner in such a way that measured grid-side current intensities (II, 12, 13) for at least one prescribed frequency (f1) are converted to current intensities (ID1, IQ1) of a two-axis d-q coordinate system, on the basis of which current intensities voltage specifications (UD1, UQ1) in the d-q coordinate system are determined,
**characterized in that**
voltage-based impression into the current-based control system is performed, for which impression corrected values in both current intensities (ID1, IQ1) in the d-q coordinate system are taken into account as input variables before the determination of the voltage specifications (UD1, UQ1) in the d-q coordinate system.

7. Method according to Claim 6, **characterized in that** the voltage-based impression is performed based on characteristic maps.

8. Method according to Claim 6, **characterized in that** the voltage-based impression is performed based on an observer, wherein the observer maps a synchronous generator.

## Revendications

1. Éolienne (1) comprenant un générateur (4) qui peut être entraîné par un rotor (2) pour générer de l'énergie électrique, un convertisseur (5) comprenant un inverseur (52) destiné à convertir l'énergie électrique générée par le générateur (4) pour alimenter un réseau (7) et un dispositif de régulation (60) destiné à réguler le convertisseur (5), dans lequel le dispositif de régulation (60) est conçu pour la conversion pilotée en courant de paramètres de régulation destinés à la génération de puissance réactive et active et comprend une unité de régulation pilotée en courant (62) destinée à l'inverseur (52) du convertisseur (5), comportant au moins une régulation, dans lequel des intensités de courant mesurées côté réseau (I₁, I₂, I₃) pour au moins une fréquence prédéterminée (f₁) sont converties en des intensités de courant (I_{D1}, I_{Q1}) d'un système de coordonnées d-q à deux axes, sur la base desquelles deux régulateurs (R_{D1}, R_{Q1}) déterminent des paramètres de tension (U_{D1}, U_{Q1}) dans le système de coordonnées d-q,
**caractérisé en ce qu'**il est prévu un module de régulation supplémentaire (10) qui est conçu pour appliquer un guidage de tension dans le dispositif de régulation piloté en courant (60), dans lequel des valeurs de correction qui dépendent de la tension côté réseau (U₁, U₂, U₃) sont prises en compte en tant que partie de valeurs de consigne des deux intensités (I_{D1}, I_{Q1}) dans le système de coordonnées d-q pour modifier les grandeurs d'entrée des deux régulateurs (R_{D1}, R_{Q1}).

2. Éolienne selon la revendication 1, **caractérisée en ce que** le module de régulation supplémentaire (10) est conçu pour appliquer le pilotage en tension en agissant sur au moins une valeur de consigne et/ou au moins une valeur intermédiaire du dispositif de régulation (60).

3. Éolienne selon la revendication 1 ou 2, **caractérisée en ce qu'**il est prévu une unité de mesure (11) destinée à effectuer une mesure de tension de la tension côté réseau de l'éolienne (1), dans laquelle l'unité de mesure (11) est conçue pour transmettre les valeurs de mesure au module de régulation supplémentaire (10).

4. Éolienne selon l'une des revendications précédentes, **caractérisée en ce que** le module de régulation supplémentaire (10) est conçu pour déterminer au moins une valeur de consigne, au moins une valeur intermédiaire, au moins une valeur de correction d'une valeur de consigne et/ou au moins une valeur de correction d'une valeur intermédiaire à partir de diagrammes caractéristiques établis sur la base de valeurs de mesure et d'entrée.

5. Éolienne selon l'une des revendications 1 à 3, **caractérisée en ce que** le module de régulation supplémentaire (10) est réalisé sous la forme d'un module observateur (13) qui représente un générateur synchrone.

6. Procédé de mise en oeuvre d'une éolienne (1) au moyen d'un convertisseur (5) comprenant un inverseur (52), dans lequel l'inverseur (52) du convertisseur (5) de l'éolienne (1) est régulé de telle sorte que des intensités de courant mesurées côté réseau (I₁, I₂, I₃) pour au moins une fréquence prédéterminée (f₁) sont converties en des intensités de courant (I_{D1}, I_{Q1}) d'un système de coordonnées d-q à deux axes, sur la base desquelles des paramètres de tension (U_{D1}, U_{Q1}) sont déterminés dans le système de coordonnées d-q, **caractérisé en ce qu'**une application pilotée en tension est réalisée dans la régulation pilotée en courant, selon laquelle des valeurs de correction des deux intensités de courant (I_{D1}, I_{Q1}) dans le système de coordonnées d-q sont prises en compte en tant que grandeurs d'entrée avant la détermination des paramètres de tension (U_{D1}, U_{Q1}) dans le système de coordonnées d-q.

7. Procédé selon la revendication 6, **caractérisé en ce que** l'application pilotée en tension est effectuée sur la base de diagrammes caractéristiques.

8. Procédé selon la revendication 6, **caractérisé en ce que** l'application pilotée en tension est effectuée sur la base d'un observateur, dans lequel l'observateur représente un générateur synchrone.
